Europäisches Patentamt

European Patent Office

Office européen des brevets

(11) Numéro de publication: **0 480 978 B1**

(19)

(12) **FASCICULE DE BREVET EUROPEEN**

(45) Date de publication de fascicule du brevet: **14.12.94**  (51) Int. Cl.⁵: **C01B 25/237**, C01B 25/45

(21) Numéro de dépôt: **90910754.2**

(22) Date de dépôt: **04.07.90**

(86) Numéro de dépôt internationale :
**PCT/FR90/00507**

(87) Numéro de publication internationale :
**WO 91/00244 (10.01.91 91/02)**

(54) **PROCEDE POUR ELIMINER LES METAUX LOURDS DE L'ACIDE PHOSPHORIOUE.**

(30) Priorité: **04.07.89 FR 8908979**

(43) Date de publication de la demande:
**22.04.92 Bulletin 92/17**

(45) Mention de la délivrance du brevet:
**14.12.94 Bulletin 94/50**

(84) Etats contractants désignés:
**BE DE ES IT NL SE**

(56) Documents cités:
**EP-A- 0 253 454**

(73) Titulaire: **OFFICE TOGOLAIS DES PHOSPHA-TES**

**Kpeme (TG)**

Titulaire: **BECKER, Pierre**
**4, Avenue Brimont**
**F-78400 Chatou (FR)**

(72) Inventeur: **BECKER, Pierre**
**4, avenue Brimont**
**F-78400 Chatou (FR)**

(74) Mandataire: **Martin, Jean-Jacques et al**
**Cabinet REGIMBEAU**
**26, Avenue Kléber**
**F-75116 Paris (FR)**

Rank Xerox (UK) Business Services
(3.10/3.09/3.3.3)

## Description

La présente invention a pour objet un procédé de traitement de l'acide phosphorique. Elle concerne plus particulièrement un procédé de traitement de l'acide phosphorique concentré pour en éliminer certains métaux lourds ainsi que les fines boues qui s'y accumulent.

Par acide phosphorique concentré, il convient d'entendre un acide dont la concentration, exprimée en $P_2O_5$ (poids) suivant l'usage des phosphatiers, est comprise entre environ 50 et environ 60 % (sauf quand cela est spécifié autrement, les zéros ne sont pas considérés comme des chiffres significatifs). Ces valeurs sont approximatives et dépendent notamment du procédé utilisé pour la conversion des phosphates en acide phosphorique. Ils dépendent également des impuretés, qui comme le magnésium, peuvent jouer un rôle sur la viscosité.

Les teneurs ci-dessus sont arrondies et visent notamment des acides qui peuvent être à 48 % environ.

Ces acides après leur réaction de formation ont été soumis à une évaporation pour atteindre les concentrations ci-dessus. En général la concentration en $P_2O_5$ est comprise entre 50 (deux chiffres significatifs) et 57 %. Cet acide phosphorique est généralement pauvre en calcium dissous mais peut contenir des quantités relativement importantes d'acide sulfurique. En général, ces acides clarifiés avant l'étape de concentration-évaporation ne sont pas traités directement à la sortie de l'évaporation et sont en état de déséquilibre des sels en suspension et en solution suffisante pour que dans tous les endroits où ils sont stockés, des quantités importantes de sulfate de calcium et d'autres composés se déposent, ce qui demande un traitement à la fois important et coûteux.

Parmi les multiples impuretés contenues dans les minerais de phosphate et notamment dans les apatites, on peut citer l'uranium et les terres rares, ainsi que le fer, l'aluminium et le titane. De nombreux procédés de récupération d'uranium et le cas échéant de terres rares ont été proposés pendant la période où les cours de l'uranium étaient particulièrement hauts.

Parmi les très nombreux autres éléments présents dans le minerai de phosphate et donc dans l'acide phosphorique, il convient de citer les métaux lourds divalents (Sr, Ba) et plus particulièrement le cadmium.

Si certains des minerais de phosphate sont relativement exempts de cadmium (inférieurs à quelques ppm), d'autres minerais sont relativement riches en cet élément et peuvent atteindre parfois jusqu'à des valeurs dépassant largement 100 ppm.

Pour des raisons d'environnement, il est de moins en moins acceptable d'utiliser comme engrais des phosphates qui contiennent un élément réputé comme toxique, à savoir le cadmium.

De nombreux pays ont édicté ou sont sur le point d'édicter, des réglementations limitant la teneur en cadmium dans les engrais.

C'est la raison pour laquelle, pour exploiter des gisements présentant des zones cadmifères, il est important, voire essentiel, de pouvoir réaliser un décadmiage de leurs minerais ou de l'acide phosphorique qui en est issu.

De très nombreux procédés de décadmiage ont été proposés tels que par exemple l'extraction par solvant, les précipitations de sulfure, des éliminations par échange d'ions, et des techniques d'électrolyse. Toutefois, les volumes d'acides phosphoriques à traiter sont tellement élevés par rapport à la faible quantité de cadmium contenu que la plupart des procédés proposés, bien qu'ils soient chimiquement efficaces, constitue une charge économique lourde.

Plus récemment, un procédé proposé dans la demande de brevet européen publiée sous le n° 0 253 454 propose de précipiter de l'anhydrite et de réaliser par cette précipitation d'anhydrite un entraînement de cadmium qui permettrait de purifier l'acide phosphorique.

Toutefois, dans ce procédé, les teneurs en cadmium de l'anhydrite sont trop faibles pour rendre possible un retraitement et conduisent à des mises en décharge contrôlée considérables d'anhydrite qui risque d'être polluant en raison de sa teneur en cadmium.

Par ailleurs, le procédé tel que proposé, ne semble pas applicable aux fortes concentrations d'acides phosphoriques. En effet, ce procédé tel qu'il est décrit grossièrement dans la description et plus précisément dans les exemples, vise essentiellement à précipiter l'anhydrite à partir d'acide phosphorique de concentration moyenne telle que par exemple 44 % en $P_2O_5$ par l'addition en excès d'acide sulfurique qui fait (re)cristalliser le sulfate de calcium, lequel entraîne faiblement le cadmium contenu dans de l'acide phosphorique. Il est d'ailleurs à noter que la teneur en cadmium résiduel reste relativement élevée quand il s'agit de purifier le seul acide phosphorique et non pas un mélange d'acide phosphonitrique. Quant à la teneur des rejets, elle est suffisamment forte pour poser un problème de pollution et suffisamment faible pour impliquer des quantités considérables non retraitables puisque la teneur en cet élément des rejets de sulfate de calcium varie de 23 ppm (exemple 4) à 400 ppm (exemple 2).

En fait, ce procédé ne fait que déplacer le problème de l'acide phosphorique vers le stockage de sulfate de calcium susceptible d'être lixivié par les différentes eaux atmosphériques. Par ailleurs, le coût d'un tel procédé est élevé en ce qui concerne les investissements tant en raison des quantités considérables de sulfate de calcium à cristalliser, que du temps de séjour énorme nécessaire.

En fait, pour qu'un procédé d'élimination de cadmium soit économiquement acceptable, il est souhaitable qu'il réalise une autre opération que celle de l'élimination du cadmium proprement dite, opération qui peut être soit la récupération d'autres métaux à valeur élevée, soit un traitement nécessaire à la production d'acide phosphorique, ou très avantageux pour la qualité de ce dernier.

C'est pourquoi, un des buts de la présente invention est de fournir un procédé des traitements de l'acide phosphorique concentré qui soit peu coûteux.

Un autre but de la présente invention est de fournir un procédé du type précédent qui n'implique pas un volume de rejets importants à traiter.

Un autre but de la présente invention est de fournir un procédé d'élimination du cadmium et d'autres métaux lourds qui réalise en outre une opération nécessaire, telle que l'élimination de boues, dans le traite'ment de l'acide phosphorique.

Ces buts et d'autres qui apparaîtront par la suite sont atteints au moyen d'un procédé de traitement de l'acide phosphorique en vue d'éliminer des cations métalliques lourds, notamment du cadmium, et des boues qui y sont contenus, caractérisé en ce qu'on utilise de l'acide phosphorique concentré présentant une teneur exprimée en proportion de $P_2O_5$ en poids comprise entre 50 et 60% et une teneur en solide inférieure à 5%, en ce qu'on effectue le contrôle de la sursaturation en sulfate de calcium de l'acide phosphorique pour former par précipitation un composé de formule I:

$$(SO_4)_{1-x}(PO_4)_x(H)_yCa_{1-\delta}M;$$

où x est compris entre $0,5.10^{-2}$ et $1.10^{-1}$, avantageusement entre $1.10^{-2}$ et $0,5.10^{-1}$;
y est compris entre 0 et $x + \delta$, de préférence entre $x - \frac{\delta}{2}$ et $x + \frac{\delta}{2}$;
$\delta$ indique la substitution chimique du calcium par d'autres cations métalliques, et
M représente un ou plusieurs cations métalliques contenus dans l'acide phosphorique de départ dont la charge totale est environ égale à $2\delta + x - y$, et dont le rayonnement ionique s'écarte d'au plus 1/3 de celui du cation $Ca^{++}$.

Le composé se forme particulièrement bien pour les cations dont le rayon ionique s'écarte d'au plus environ 1/3, avantageusement 1/4, de préférence 1/10 de celui du cation $Ca^{++}$, $Cd^{++}$, $Y^{3+}$. Ce phénomène est parfaitement illustré par la comparaison des précipitations du strontium et du baryum. Ce dernier métal dont le rayon ionique est supérieur à celui du calcium d'environ 1/3 (cf. tables de Linus Pauling) est beaucoup moins bien incorporé dans le composé I que le strontium dont l'écart avec le calcium n'est que de 25 %.

En particulier, M peut s'écrire sous la forme de $M_1 + M_2$ où $M_1$ est un cation métallique chargé deux fois et $M_2$ est un métal chargé trois fois. $M_1$ est de préférence choisi parmi les métaux divalents dont le rayon ionique n'est pas très différent de celui du cadmium ou du calcium.

En ce qui concerne les métaux $M_2$, leur rayon ionique doit être avantageusement voisin de celui de l'yttrium trivalent ou du cadmium ou du calcium divalents.

En effet, de manière surprenante, il a été montré au cours de l'étude qui a mené à la présente invention, que ce composé qui, à la connaissance des déposants, n'a jamais été décrit auparavant et permet d'éliminer une partie importante des métaux lourds présents dans l'acide phosphorique et plus particulièrement des métaux réputés polluants, tels que le cadmium ou des métaux dont la récupération est intéressante telle que par exemple l'yttrium et les éléments à sous couche f, notamment lanthane et lanthanides.

La valeur de y dépend des métaux précipités et est en général quand on précipite surtout des métaux divalents, égale à x au dixième près. Dans ce cas, il se forme essentiellement un groupement hydrogénophosphate.

La valeur de delta est en général inférieure à x et même inférieure à x/2. En général delta est supérieur à $10^{-3}$. Il convient toutefois de souligner que la valeur de delta dépend surtout de la pureté de l'acide phosphorique traité. Il convient également de noter qu'en fin de précipitation, delta est très sensiblement inférieur aux valeurs de début de précipitation.

Quand delta est très faible, c'est-à-dire inférieur à $10^{-3}$, y = x à 1 ou 2 % près.

Pour éviter que l'acide phosphorique avant traitement selon la présente invention n'ait de trop fortes teneurs en solides, il est souhaitable qu'une séparation solide/liquide ait été faite. Cette séparation liquide/solide peut être réalisée par toutes les techniques connues en la matière, telles que la décantation.

Avantageusement, la teneur en solide, exprimée en pourcent poids, est inférieure ou égale à 2 %.

Avantageusement, pour faciliter la germination, il est souhaitable qu'il reste des matières solides en suspension, en général plus de 0,5 %, avantageusement plus de 1 %.

Ainsi, la teneur optimale de matière solide en suspension dans l'acide phosphorique avant traitement est d'environ 2 %.

Pour obtenir le composé de formule I, il est important que la sursaturation en sulfate de calcium de l'acide phosphorique soit régulée de manière a obtenir une vitesse de croissance des cristaux favorisant l'existence du composé I.

Cette sursaturation est un facteur déterminant dans la cinétique de cristallisation du composé I. A l'aide d'expériénce de routine, l'homme de l'art pourra déterminer quels taux de sursaturation conduisent aux composés de formule I.

La sursaturation a laquelle il est fait référence ci-dessus peut être contrôlée par des techniques connues de l'homme de métier et avantageusement par les techniques décrites dans la suite du présent titre.

Il est à noter que, et c'est l'un des enseignements essentiels de la présente invention, plus il y a de groupes phosphate (c'est-à-dire plus x est élevé) dans le réseau, meilleure est la précipitation des impuretés métalliques symbolisées par M et notamment du cadmium. Toutefois, un compromis doit être trouve entre les différentes contraintes auxquelles est soumis un acide phosphorique en cours d'élaboration et notamment aux contraintes économiques qui sont liées au temps de séjour au sein des différents réacteurs.

Un autre aspect de la présente invention est que la précipitation d'un composé de type I permet de réduire considérablement la formation des boues qui précipiteront ultérieurement dans l'acide concentre.

Ces "boues" en partie formées lors de l'élaboration de l'acide phosphorique par voie humide représentent un inconvénient bien connu des fabricants d'acides phosphorique. Elles sont constituées de particules solides provenant en partie d'un passage inévitable à travers les mailles ou a travers (es perforations des toiles du filtre de l'acide de production (20/30 et 40/45 % de $P_2O_5$ selon le procédé) d'une part, et en partie de précipités prenant naissance après la filtration de l'acide par suite de sursaturation due à la concentration par évaporation et au refroidissement ultérieur de l'acide au stockage.

Par ailleurs ces solides sont en évolution car une partie de ceux-ci se sont formés dans un milieu thermodynamiquement différent du milieu final à savoir l'acide concentré avec une teneur en $P_2O_5$ au-dessus de 50 %. L'instabilité qui en découle conduit ces solides à recristalliser souvent dans des lieux et sous des formes non désirés.

Ces précipités se forment dans des conditions extrêmement défavorables (milieu très visqueux et peu ou pas agité) et présente par voie de conséquence des caractéristiques qui rendent leur séparation d'avec l'acide phosphorique très difficile : mauvaise filtrabilité, décantation difficile etc.).

Ces post-précipitations peuvent s'étendre sur plus de 40 jours et ont souvent une influence défavorable sur la qualité de l'acide et en perturbent le transport et le stockage (nettoyage des tankers avec pertes d'acide et pollution marine, bouchage des circuits etc.). Pour donner une idée de l'ampleur du phénomène, rappelons que dans l'acide à 30 % environ de $P_2O_5$, le sulfate de calcium dissous dans l'acide phosphorique représente entre environ 3 et environ 6 % de $SO_4Ca$ par rapport au poids d'anhydride phosphorique $P_2O_5$.

Lorsque l'on passe à un acide commercial, c'est-à-dire ayant de 50 à 54 % en $P_2O_5$, la solubilité en sulfate de calcium exprimée de la même manière passe à une valeur comprise entre 0,4 et 0,9 %, ce qui signifie qu'une partie importante du sulfate de calcium présent dans l'acide phosphorique à 30 % sera précipité postérieurement à sa production, soit environ 25 à 50 kg de solide par tonne de $P_2O_5$.

En fait le sulfate de calcium n'est qu'un cas particulier d'un phénomène plus général : d'autres précipitations impliquant d'autres métaux tels que le potassium, le magnésium, l'aluminium et le fer ont également lieu, ainsi que les fluosilicates alcalins.

De manière surprenante, le procédé selon la présente invention permet d'éviter au moins partiellement ces précipitations tardives et permet d'obtenir un acide phosphorique qui est sensiblement en équilibre avec ces éléments dissous. En effet le composé selon la formule I permet d'une part, d'éliminer la quasi-totalité de la sursaturation en sulfate de calcium de l'acide sortant, et d'autre part, d'entraîner une partie significative des métaux dissous dans le milieu.

Ainsi, le procédé selon la présente invention permet à la fois de réduire de manière très notable la quantité de métaux lourds et notamment de cadmium dans le milieu, tout en résolvant le problème des boues.

En ce qui concerne la valeur de delta, cette valeur est extrêmement variable et dépend essentiellement des impuretés présentes dans l'acide phosphorique. D'une manière générale, la valeur de delta n'est pas significativement supérieure à la valeur de x. Les métaux précipités par cette technique sont essentiellement des métaux lourds tels que le cadmium et d'autres alcalino-terreux Ba, Sr, dont le rayon ionique n'est pas très différent de celui du calcium ; toutefois, la présence du groupement phosphate ou hydrogénophosphate semble faciliter la précipitation d'ions métalliques d'autres valences et notamment des métaux à sous couche f, plus particulièrement les lanthanides et les terres rares (Y, La ...).

Un des paramètres qui intervient dans la formation du compose de formule I est la concentration en acide phosphorique. Si l'on exprime cette concentration en proportion de $P_2O_5$ en poids par rapport à l'acide phosphorique, les zones préférées sont avantageusement entre 0,50 et 0,57, de préférence entre 51 et 55 %. Il convient de noter que pour les valeurs au voisinage de celles obtenues par le procédé semi-hydrate sans concentration, c'est-à-dire entre 40 et 45 % environ, on n'obtient plus le composé I quelle que soit l'influence des autres paramètres. On obtient guère que des composés qui ont une structure distincte du composé I comme l'indique les spectres de rayons X.

Un des moyens de réguler la sursaturation en sulfate de calcium consiste d'une part à ajuster la concentration d'acide sulfurique à une valeur comprise entre 1 et 7 % environ, de préférence entre 2 et 5 % en poids. Cette addition d'acide sulfurique en général ne provoque que très peu de précipitation, l'essentiel du calcium ayant déjà été précipité auparavant.

Une fois l'addition de l'acide sulfurique réalisée, il convient d'ajouter en quantité contrôlée les ions calcium qui sont introduits sous une forme phospho-soluble, c'est-à-dire sous une forme qui serait soluble en l'absence d'acide sulfurique. Il convient aussi d'éviter autant que faire se peut, d'ajouter des anions qui seraient gênants dans la suite du procédé. Comme anions possible, on peut citer les nitrates et surtout les phosphates.

L'addition d'ions calcium se fait de préférence sous forme liquide, c'est-à-dire sous forme dissoute ou sous forme partiellement dissoute et partiellement en suspension. Une des solutions préférées est d'utiliser un acide phosphorique avantageusement de même concentration que celui que l'on désire purifier et de dissoudre dans ce dernier des matières premières contenant du calcium et éventuellement du phosphate comme par exemple les minerais de phosphate tels que l'apatite.

On peut notamment utiliser comme acide phosphorique, ou bien le même acide phosphorique que celui qui aura a subir l'ajustement de la teneur en acide sulfurique, ou bien l'acide phosphorique après le traitement selon la présente invention. La première de ces deux possibilités est sans doute moins coûteuse mais elle nécessite de prévoir la précipitation de sulfate de calcium pour éliminer l'acide sulfurique éventuellement présent. La deuxième possibilité permet d'éviter l'essentiel des problèmes de précipitation et de réintroduire une solution purifiée dans les derniers étages de purification et de précipitation quand le procédé est présent plusieurs étages.

La température est avantageusement comprise entre 100°C et le point d'ébullition, de préférence, juste au dessous du point d'ébullition, soit environ entre 110°C, de préférence entre 1 et 5°C en dessous du point d'ébullition, en général, on travaille aux alentours de 120°C.

Ainsi qu'il l'a été dit précédemment, un des paramètres important est la cinétique de formation des cristaux de précipité, laquelle cinétique dépend de la sursaturation. Selon la présente invention, il est particulièrement avantageux de régler la sursaturation en jouant sur les additions de calcium, telles que définies précédemment et en régulant la sursaturation de manière que la vitesse de croissance des grains, en régime permanent, soit comprise entre 10 et 100 micromètres, de préférence entre 15 et 30 micromètres/heure.

L'addition doit se faire sous agitation contrôlée, de manière à assurer une bonne diffusion du réactif et à éviter une accumulation de précipité à l'endroit où a lieu l'addition. Avantageusement, l'agitation est réalisée en régime turbulent avec, de préférence, un coefficient $N^3D^2$ compris entre 2 et 4 ($N$ = vitesse en tours/seconde et $D$ = diamètre en mètre du mobile d'agitation).

Selon une mise en oeuvre avantageuse de la présente invention, le procédé comporte les étapes suivantes :

a) ajustement de la teneur en acide sulfurique à une valeur comprise entre 1 et 7 % en poids,
b) addition de calcium sous forme phospho-soluble,
c) filtration des précipités obtenus.

Avantageusement, l'étape b) est menée de manière qu'après elle, la teneur en acide sulfurique soit au plus égale à 2, de préférence à 1 % en poids. L'étape b) se fait comme indique précédemment par addition de calcium soluble. Cette addition étant réalisée en continu ou en discontinu de manière à réguler la sursaturation en sulfate de calcium aux valeurs spécifiées ci-dessus.

La durée de l'étape b), c'est-à-dire l'addition et la précipitation est avantageusement supérieure à 1/2 heure, pour des raisons économiques, il n'est pas souhaitable de poursuivre l'opération pendant des durées supérieures à 1 /4 de journée.

Les deux étapes a) et b) peuvent être interverties, menées simultanément ou alternativement. Cependant, l'ordre des étapes n'est pas sans importance sur les temps de séjour et sur la teneur résiduelle en acide sulfurique. C'est pourquoi, sur le flux principal lorsqu'il y en a plusieurs, il est préférable de terminer les ajustements et additions par l'addition de calcium.

Le procédé peut comporter après l'étape c) un traitement du gateau de filtration pour transformer le précipité I en sulfate de calcium non pollué par les métaux lourds, pour éliminer les métaux lourds et pour recycler vers les étapes amont une solution sulfo-phosphorique diluée qui contient l'ion phosphate du précipité I.

Pour ce faire, le procédé peut comporter les étapes ultérieures suivantes :

d) digestion du gateau de filtration dans de l'acide sulfurique dont la concentration pour des raisons de cinétique est avantageusement comprise entre environ 0,1 M et environ 2 M, de préférence entre 0,5 et 1,5 M.

La température est avantageusement comprise entre 0°C et 30°C, cependant que la durée (temps de séjour du gateau) est de préférence supérieure à une dizaine d'heures.

Cette étape d) est suivie d'une étape e) de séparation liquide/solide (décantation, filtration, centrifugation...).

La fraction solide correspond à du sulfate de calcium dihydrate suffisamment pur pour que la décharge, voire l'utilisation, ne se heurte à des difficultés d'ordre réglementaire.

La partie liquide est constituée par une solution sulfo-phosphorique contenant les métaux lourds précipités, dans le composé I (Cd, Y ...).

C'est la raison pour laquelle le procédé peut comprendre une étape supplémentaire f) de séparation desdits métaux d'avec la solution sulfo-phosphorique et le recyclage de cet acide sulfo-phosphorique dilué en amont du procédé de fabrication de l'acide phosphorique.

La technique de séparation des métaux lourds dépend de la nature des métaux piégés dans le composé I et fait appel à des techniques connues en elles-mêmes.

A titre indicatif, on peut utiliser des précipitations aux sulfures ou à l'acide sulfhydrique ou des électrolyses. On peut également utiliser des résines échangeuses d'ions qui, telles que les résines sulfoniques, amino-phosphoniques ou complexantes, peuvent fixer des métaux bi- ou tri-valents en milieu relativement acide, comme un acide sulfurique 1M.

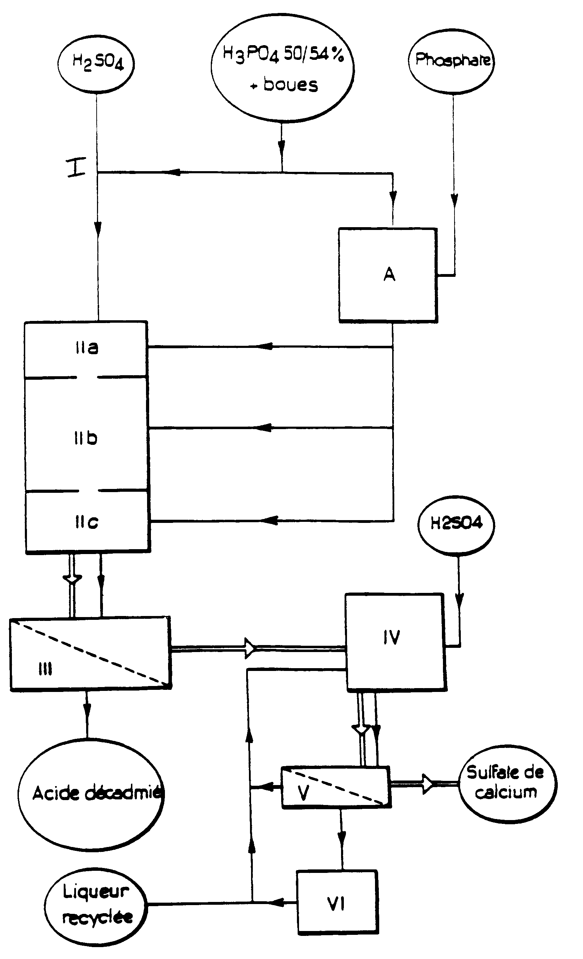

Une mise en oeuvre selon la présente invention est schématisée par le rhéogramme constituant la figure 1. Dans ce rhéogramme, où le circuit des liquides est indiqué par un trait simple et où le circuit des solides est indiqué par un double trait (la pulpe étant symbolisée par un trait simple et un trait double), l'acide phosphorique après filtration est séparé en deux fractions inégales. La fraction majoritaire est dirigée vers le point de mélange 1 où a lieu l'ajustement en teneur d'acide sulfurique. L'acide phosphorique, dont la teneur en acide sulfurique a été ajustée, est introduit dans un réacteur de précipitation II pouvant comporter plusieurs étages ; dans le rhéogramme sont figurés trois étages, un étage de début de précipitation de cadmium IIa, un étage de fin de précipitation de cadmium IIb et un étage d'ajustement de l'acide IIc.

La partie minoritaire de l'acide phosphorique est dirigée vers un réacteur de dissolution A où l'on mélange et dissout la matière calcifère avec l'acide phosphorique.

La matière calcifère est en général un minerai de phosphate tel que l'apatite, mais cela peut être également d'autres phosphates de calcium ou bien des sels solubles de calcium tels que le nitrate de calcium. La solution issue du réacteur A est envoyée dans chacun des étages du réacteur de précipitation IIa, IIb, IIc en réglant le débit de la solution pour maintenir une sursaturation satisfaisante dans chacun des étages. En outre, à l'étage IIc l'addition et le temps de séjour doivent être tels que la quasi-totalité de l'acide sulfurique soit éliminée sous forme de composé I. La suspension passe par débordement d'un étage à l'autre, puis la suspension issue de l'étage IIc est introduite dans un dispositif de séparation liquide/solide III où l'on récupère un gateau qui est optionnellement dirige vers le digesteur IV, cependant que l'acide phosphorique obtenu après séparation des matières solides est dérigé vers le stockage en vue de sa commercialisation ou de sa transformation en différents engrais.

Le gateau introduit dans le digesteur IV est mis en pulpe et soumis à l'action d'un acide sulfurique de concentration moyenne, entre environ 1/2 et environ 2 M, puis la suspension est envoyée dans un système de séparation liquide/solide où l'on sépare un gateau constitué essentiellement de sulfate de calcium plus ou moins hydraté et une solution constituée par de l'acide sulfurique et de l'acide phosphorique contenant les métaux entraînés par le composé I. Cette solution est envoyée dans un système VI qui en éliminera l'essentiel des métaux lourds présents et la solution purifiée effluente constituant une purge sera recyclée vers l'amont du procédé phosphorique, cependant que l'autre flux sera dirigé vers la cuve de recristallisation IV.

Ainsi, selon la présente invention, il est possible d'une part d'obtenir un décadmiage très efficace. Ce décadmiage permet de passer d'une teneur en cadmium de l'acide phosphorique d'environ 50-100 ppm jusqu'à une valeur qui peut être inférieure à 3 voire à 1 ppm. Ainsi, ce décadmiage peut être réalisé pour tout acide quelque soit leur teneur initiale en cadmium. L'efficacité du procédé dépend de la vitesse de précipitation et donc du recyclage de la sursaturation en sulfate de calcium dans les compartiments du réacteur II. Il dépend également du nombre d'étages pour la précipitation du composé I. Il dépend enfin de la quantité d'acide sulfurique et de calcium qui aura été précipitée.

Quoique cela soit plus coûteux, il est possible de prévoir une ou plusieurs séparations liquide/solide entre les différents étages, ce qui permet d'obtenir des composés I de différentes concentrations en métaux.

D'autre part, ce procédé permet de résoudre le problème des post-précipitations du calcium et du sulfate. Enfin, il permet un rejet, ou une utilisation, de sulfate de calcium propre.

L'exemple non limitatif suivant illustre le procédé selon la présente invention.

L'acide phosphorique concentré (53 % sortant de l'atelier de concentration) après filtration et sans transit par un stockage intermédiaire contenant 60 ppm de cadmium et séparé en deux flux d'un rapport de 1:5. Le premier flux (minoritaire) est additionné de la même matière première phosphatée que celle qui fut utilisée pour la fabrication de l'acide pour donner un acide phosphorique contenant 80 g/l de calcium (solution + suspension). Cette opération est réalisée dans le réacteur A et donne une épaisse suspension de phosphate mono-calcique et d'autre part, de résidu de phosphate non attaqué dans un excès d'acide phosphorique.

Dans un réacteur II, compartimenté, avec de préférence trois compartiments, les deux flux d'acide sont remélangés selon des ratios bien définis pour contrôler les meilleures conditions de croissance des cristaux.

A la sortie du réacteur II, la bouillie est amenée sur un filtre à bande comportant une toile serrée pour un optimum de séparation des solides et filtrée sous vide. Le gâteau est lavé à contre-courant avec de l'eau chaude, avec trois passages, ce qui donnera un faible débit d'acide de lavage entre 30 et 40 % de $P_2O_5$ qui sera recyclé vers l'unité phosphorique. La décadmiation est de 95 % avec élimination de boues et contrôle d'excès sulfurique. La masse du gâteau correspond à 40 et 60 kg de solides calculés sous forme sèche, par tonne d'acide phosphorique à 54 %, selon la teneur en solide de l'acide alimenté.

La filtrabilité de la bouillie, y compris les lavages à contre-courant avec l'eau, ne nécessite qu'un dispositif relativement petit puisque permettant de traiter 60 tonnes de $P_2O_5$ par mètre carré et par jour, ce qui permet de travailler avec des filtres de petite taille, sous condition que les réglages des flux entre les compartiments A et II soient bien ajustés.

Les quantités postprécipitées dans l'acide marchand décadmié sont inférieures à 0,5 %. La teneur en cadmium est inférieure à 3 ppm, soit un rendement d'élimination (60-3)/60 = 0,95. La teneur en acide sulfurique est en dessous de 2%.

La liqueur de lavage recyclée du filtre correspond à environ 80 litres par tonne de $P_2O_5$ traitée.

Les solides séparés contiennent plus de 95 % du cadmium initialement présent dans l'acide phosphorique. Ils contiennent environ 5 à 10 % de $P_2O_5$ selon les degrés de décadmiation et les boues originelles. Le $P_2O_5$ sera récupéré au cours de la recristallisation ou digestion ultérieure.

Le traitement final comporte une recristallisation par digestion en milieu aqueux et acide sulfurique dans une cuve compartimentée IV formant la digestion IV, avec de préférence 3 compartiments et un recyclage contrôlé. Le volume de bouillie de recristallisation est contrôlé pour son taux de solides et son degré de conversion. Le volume de bouillie correspond à environ environ 100 litres par tonne d'acide phosphorique 54 % décadmié, mais dépend du taux de solide avant alimentation.

Un petit filtre V dont la surface équivaut à environ 0,1 $m^2$ par tonne de $P_2O_5$ total décadmié, sépare les solides retraités rejetés et exempt de cadmium, de leur liqueur mère qui contient le cadmium et à partir de laquelle il sera précipité sous forme de sulfure de cadmium et séparé par centrifugation. Après la séparation du sulfure de cadmium, la liqueur mère est recyclée vers l'étape IV de digestion et de recristallisation. Une purge, éventuellement mélangée aux eaux de lavage du gateau de précipité issu du réacteur B est recyclée vers l'amont du procédé de production d'acide phosphorique et régule la teneur en $P_2O_5$ et en métaux autres que ceux récupérés entraînés par le composé I dans la liqueur mère de recristallation.

Il peut être également intéressant de ne réaliser la récupération d'un ou plusieurs des métaux entraînés par le composé I que sur une fraction du circuit de traitement du composé I de manière que les recyclages permettent de faire monter la concentration dudit ou desdits métaux à une valeur qui permette l'utilisation de techniques relativement simples.

A titre indicatif, il convient de noter que du point de vue de la diffraction de rayons X, il est difficile de donner des valeurs précises pour les principales raies, compte tenu des divers paramètres qui sont variables selon la composition des précipités de formule I. Toutefois, on peut indiquer que les principales raies correspondent à un décalage net avec l'anhydrite.

Les exemples non limitatifs suivants illustrent l'invention :

Exemple 1

Dans un réacteur agité, 0,50 litre d'acide phosphorique à 55 % de $P_2O_5$, 64 ppm de cadmium, 140 ppm d'yttrium et 1,0 % de "boues", sont chauffés à 120 °C et mélangés avec 80 grammes de phosphate à 36 % de $P_2O_5$.

Dans un deuxième réacteur agité, 0,85 litres d'acide phosphorique de la même qualité sont également chauffés à 120 °C et additionnés de 40 $cm^3$ d'acide sulfurique à 98 % $H_2SO_4$.

Le liquide du premier réacteur est additionné au deuxième. Un précipité de 102 grammes de cristaux se forme. Ce dernier est filtré et lavé. Le solide séparé contient 0,13 % de cadmium et 0,27 % d'yttrium. Le spectre de fluorescence montre la présence d'autres impuretés métalliques en quantité inférieure à ces deux éléments.

L'acide décadmié contient au plus que 4 ppm de cadmium.

Après 40 jours, le taux de solides post-précipités est inférieur à 0,5 %.

Exemple 2

Dans un réacteur agité, 0,35 litre d'acide phosphorique à 55 % de $P_2O_5$, 64 ppm de cadmium, 140 ppm d'yttrium et 0,3 % de "boues", sont chauffés à 120°C et mélangés avec 40 grammes de phosphate à 36 % de $P_2O_5$.

Dans un deuxième réacteur agité, 1,00 litre d'acide phosphorique de la même qualité sont également chauffés à 120°C et additionnés de 40 cm$^3$ d'acide sulfurique à 98 % de $H_2SO_4$.

Le liquide du premier réacteur est additionné au deuxième. Un précipité de 46 grammes de cristaux se forme. Ce dernier est filtré et lavé. Le solide séparé contient 0,23 % de cadmium et 0,41 % d'yttrium.

L'acide décadmié ne contient plus que 15 ppm de cadmium.

Après 40 jours, le taux de solides post-précipités est inférieur à 0,5 %.

Exemple 3

Dans un réacteur agité, 0,35 litre d'acide phosphorique à 50 % de $P_2O_5$, 60 ppm de cadmium, 128 ppm d'yttrium et 1,3 % de "boues", sont chauffés à 120°C et mélangés avec 80 grammes de phosphate de calcium à 36 % de $P_2O_5$.

Dans un deuxième réacteur agité, 1,00 litre d'acide phosphorique de la même qualité sont également chauffés à 120°C et additionnés de 45 cm$^3$ d'acide sulfurique à 98 % de $H_2SO_4$.

Le liquide du premier réacteur est additionné aux deuxième. Un précipité de 109 grammes de cristaux se forme. Ce dernier est filtré et lavé. Le solide séparé contient 0,12 % de cadmium et 0,26 % d'yttrium.

L'acide décadmié contient au plus 3 ppm de cadmium.

Après 40 jours, le taux de solides post-précipités est inférieur a 0,5 %.

**Revendications**

1. Procédé de traitement de l'acide phosphorique en vue d'éliminer des cations métalliques lourds, notamment du cadmium, et des boues qui y sont contenues, caractérisé en ce qu'on utilise de l'acide phosphorique présentant une teneur exprimée en proportion de $P_2O_5$ en poids comprise entre 50 et 60 % et une teneur en solide inférieure à 5 %, en ce qu'on effectue le contrôle de la sursaturation en sulfate de calcium de l'acide phosphorique pour former par précipitation un composé de fomule I :

$$(SO_4)_{1-x}(PO_4)_x(H)_yCa_{1-\delta}M_\delta;$$

où x est compris entre $0,5.10^{-2}$ et $1.10^{-1}$, avantageusement entre $1.10^{-2}$ et $0,5.10^{-1}$ ;
y est compris entre 0 et x + $\delta$, de préférence entre x - $\frac{\delta}{2}$ et x + $\frac{\delta}{2}$ ;
$\delta$ indique la substitution chimique du calcium par d'autres cations métalliques, et
M représente un ou plusieurs cations métalliques contenus dans l'acide phosphorique de départ, dont la charge totale est environ égale à 2 $\delta$ + x - y et dont le rayon ionique s'écarte d'au plus 1/3 de celui du cation Ca + +.

2. Procédé selon la revendication 1, caractérisé par le fait que ledit acide phosphorique présente une teneur exprimée en proportion de $P_2O_5$ en poids, comprise entre 50 et 57 % en poids.

3. Procédé selon la revendication 2, caractérisé par le fait que la teneur en acide phosphorique exprimée en $P_2O_5$ est comprise entre 51 et 55 % en poids.

4. Procédé selon l'une des revendications 1 à 3, caractérisé par le fait que l'on ajuste la teneur en acide sulfurique à une valeur comprise entre 1 et 7 % en poids.

5. Procédé selon l'une des revendications 1 à 4 prises séparément, caractérisé par le fait que la teneur en matière solide dudit acide phosphorique est inférieure ou égale à 2 % en poids.

6. Procédé selon l'une des revendications 1 à 5, caractérisé par le fait que la température de précipitation est comprise entre 100°C et la température d'ébullition, de préférence à une température inférieure d'une valeur comprise de 1 à 5°C à celle de l'ébullition.

7. Procédé selon l'une des revendications 1 à 6, caractérisé par le fait que l'on ajuste la sursaturation en sulfate de calcium au cours de la précipitation, de manière que la vitesse de croissance des grains soit comprise entre 10 et 100 micromètres, avantageusement entre 15 et 30 micromètres à l'heure.

8. Procédé selon la revendication 7, caractérisé par le fait que la sursaturation est réglée par addition d'ions calcium postérieurement à l'éventuelle addition d'acide sulfurique.

9. Procédé selon l'une des revendications 1 à 8 prises séparément, caractérisé par le fait que la quantité de matière ajoutée audit acide phosphorique représente au plus 10 %, de préférence au plus 5 % du poids dudit acide phosphorique.

10. Procédé selon l'une des revendications 1 à 9, caractérisé par le fait que le contrôle de la sursaturation en sulfate de calcium est effectué par :
    a) ajustement de la teneur en acide sulfurique, à une valeur comprise entre 1 et 7 % en poids, et
    b) addition de calcium sous forme soluble, ladite addition pouvant être réalisée en une ou plusieurs étapes, et en ce qu'il comporte en outre l'étape suivante :
    c) filtration des précipités obtenus.

11. Procédé selon la revendication 10, caractérisé par le fait que la quantité de calcium ajoutée lors de l'étape b) est telle que l'acide sulfurique présent dans l'acide phosphorique soit au plus de 2 % en poids, de préférence au plus 1 %.

12. Procédé selon l'une des revendications 10 et 11, caractérisé par le fait que l'addition se fait sous forme soluble, de préférence sous forme d'une solution de phosphate.

13. Procédé selon l'une des revendications 10 à 12, caractérisé par le fait que l'étape b) réalisée en plusieurs stades, est menée de manière que la sursaturation en sulfate de calcium de la solution ne soit plus significative.

14. Procédé selon l'une des revendications 1 à 13, caractérisé par le fait que le composé de formule I est retraité dans une étape d) pour en éliminer le cadmium et les autres métaux susceptibles d'être intégrés dans son réseau.

15. Procédé selon la revendication 14, caractérisé par le fait que l'étape d) de retraitement du composé I est réalisée par digestion dans un acide sulfurique dont la concentration est comprise entre 0,1 et 2 M et par le fait que la solution résiduelle est soumise à une opération d'élimination des métaux lourds, avant un recyclage éventuel en amont du procédé d'acide phosphorique.

16. Procédé selon l'une des revendications 14 et 15, caractérisé par le fait que l'étape d) est menée à une température comprise entre 0°C et 30°C.

17. Composé précipité de formule I :

$$(SO_4)_{1-x}(PO_4)_x(H)_yCa_{1-\delta}M_\delta,$$

où x est compris entre $0,5.10^{-2}$ et $1.10^{-1}$, avantageusement entre $1.10^{-2}$ et $0,5.10^{-1}$;
y est compris entre 0 et x + $\delta$, de préférence entre x - $\frac{\delta}{2}$ et x + $\frac{\delta}{2}$ ;
$\delta$ indique la substitution chimique du calcium par d'autres cations métalliques, et
M représente un ou plusieurs cations métalliques contenus dans l'acide phosphorique de départ, dont la charge totale est environ égale à 2 $\delta$ + x - y et dont le rayon ionique s'écarte d'au plus 1/3 de celui du cation $Ca^{++}$.

## Claims

1. Process for treating phosphoric acid with the aim of removing heavy metal cations, in particular cadmium, and sludges contained in the acid, characterized in that phosphoric acid having a content, expressed as the proportion by weight of $P_2O_5$, of between 50 and 60% and a solids content of less than 5% is used and in that the calcium sulphate supersaturation of the phosphoric acid is controlled to form, by precipitation, a compound of the formula I:

$$(SO_4)_{1-x}(PO_4)_x(H)_yCa_{1-\delta}M_\delta \; ;$$

where x is between $0.5 \times 10^{-2}$ and $1 \times 10^{-1}$, advantageously between $1 \times 10^{-2}$ and $0.5 \times 10^{-1}$,
y is between 0 and x + $\delta$, preferably between x - $\delta/2$ and x + $\delta/2$;
$\delta$ indicates the chemical substitution of calcium by other metal cations, and
M represents one or more metal cations contained in the initial phosphoric acid, whose total charge is approximately equal to 2 $\delta$ + x - y and whose ionic radius deviates by at most 1/3 from that of the $Ca^{++}$ cation.

2. Process according to Claim 1, characterized in that said phosphoric acid has a content, expressed as the proportion by weight of $P_2O_5$, of between 50 and 57% by weight.

3. Process according to Claim 2, characterized in that the phosphoric acid content expressed as $P_2O_5$ is between 51 and 55% by weight.

4. Process according to one of Claims 1 to 3, characterized in that the sulphuric acid content is adjusted to a value between 1 and 7% by weight.

5. Process according to one of Claims 1 to 4 taken separately, characterized in that the solids content of said phosphoric acid is less than or equal to 2% by weight.

6. Process according to one of Claims 1 to 5, characterized in that the precipitation temperature is between 100°C and the boiling point, preferably at a temperature lower by a value of 1 to 5°C than the boiling point.

7. Process according to one of Claims 1 to 6, characterized in that the calcium sulphate supersaturation is adjusted in the course of the precipitation in such a way that the growth rate of the grains is between 10 and 100 micrometres per hour, advantageously between 15 and 30 micrometres per hour.

8. Process according to Claim 7, characterized in that the supersaturation is controlled by means of an addition of calcium ions after a possible addition of sulphuric acid.

9. Process according to one of Claims 1 to 8 taken separately, characterized in that the quantity of material added to said phosphoric acid represents at most 10% and preferably at most 5% by weight of said phosphoric acid.

10. Process according to one of Claims 1 to 9, characterized in that the control of the calcium sulphate supersaturation is carried out by:
    a) adjustment of the sulphuric acid content to a value between 1 and 7% by weight, and
    b) addition of calcium in a soluble form, which addition can be carried out in one or more stages,
    and in that it additionally comprises the following stage:
    c) filtration of the precipitates obtained.

11. Process according to Claim 10, characterized in that the quantity of calcium added in stage b) is such that the sulphuric acid present in the phosphoric acid is at most 2% by weight, preferably at most 1%.

12. Process according to one of Claims 10 and 11, characterized in that the addition is made in the soluble form, preferably in the form of a phosphate solution.

13. Process according to one of Claims 10 to 12, characterized in that stage b) effected in several stages is carried out in such a way that the calcium sulphate supersaturation in the solution is no longer significant.

14. Process according to one of Claims 1 to 13, characterized in that the compound of the formula I is retreated in a stage d) for the removal of cadmium and the other metals which are capable of being integrated in the crystal lattice thereof.

15. Process according to Claim 14, characterized in that stage d) of retreating the compound I is carried out by digestion in a sulphuric acid whose concentration is between 0.1 and 2 M, and that the residual solution is subjected to a heavy metal removal step before being recycled, if appropriate, to a point upstream of the phosphoric acid process.

16. Process according to one of Claims 14 and 15, characterized in that stage d) is carried out at a temperature of between 0°C and 30°C.

17. Precipitated compound of the formula I:

$$(SO_4)_{1-x}(PO_4)_x(H)_yCa_{1-\delta}M_\delta \; ;$$

where x is between $0.5 \times 10^{-2}$ and $1 \times 10^{-1}$, advantageously between $1 \times 10^{-2}$ and $0.5 \times 10^{-1}$,
y is between 0 and $x + \delta$, preferably between $x - \delta/2$ and $x + \delta/2$;
$\delta$ indicates the chemical substitution of calcium by other metal cations, and
M represents one or more metal cations contained in the initial phosphoric acid, whose total charge is approximately equal to $2\delta + x - y$ and whose ionic radius deviates by at most 1/3 from that of the $Ca^{++}$ cation.

**Patentansprüche**

1. Verfahren zur Behandlung von Phosphorsäure, um Schwermetallkationen, insbesondere Cadmiumkationen, und Schlämme, die darin enthalten sind, zu eliminieren, dadurch gekennzeichnet, daß man Phosphorsäure verwendet, die einen Gehalt, ausgedrückt als Gewichtsanteil $P_2O_5$, zwischen 50 und 60 % und einen Feststoffgehalt von unter 5 % aufweist, daß man die Übersättigung der Phosphorsäure an Calciumsulfat kontrolliert (einstellt) zur Bildung einer Verbindung der Formel (I) durch Ausfällung:

$(SO_4)_{1-x}(PO_4)_x(H)_yCa_{1-\delta}M_\delta;$

worin:

x  steht für eine Zahl zwischen 0,5 . $10^{-2}$ und 1 . $10^{-1}$, zweckmäßig zwischen 1 . $10^{-2}$ und 0,5 . $10^{-1}$,

y  steht für eine Zahl zwischen 0 und x + $\delta$, vorzugsweise zwischen x - $\delta/2$ und x + $\delta/2$;

$\delta$  die chemische Substitution des Calciums durch andere Metallkationen angibt und

M  steht für ein oder mehr Metallkationen, die in der Ausgangs-Phosphorsäure enthalten sind, dessen Gesamtladung etwa 2 $\delta$ + x - y beträgt und dessen Ionenradius höchstens um 1/3 von demjenigen des Kations $Ca^{++}$ verschieden ist.

2. Verfahren nach Anspruch 1, dadurch gekennzeichnet, daß die Phosphorsäure einen Gehalt, ausgedrückt als Gewichtsanteil an $P_2O_5$, zwischen 50 und 57 Gew.-% hat.

3. Verfahren nach Anspruch 2, dadurch gekennzeichnet, daß der Gehalt an Phosphorsäure, ausgedrückt in $P_2O_5$, zwischen 51 und 55 Gew.-% liegt.

4. Verfahren nach einem der Ansprüche 1 bis 3, dadurch gekennzeichnet, daß man den Gehalt an Schwefelsäure auf einen Wert zwischen 1 und 7 Gew.-% einstellt.

5. Verfahren nach jedem einzelnen der Ansprüche 1 bis 4, dadurch gekennzeichnet, daß der Gehalt der Phosphorsäure an Feststoffmaterial ≦ 2 Gew.-% beträgt.

6. Verfahren nach einem der Ansprüche 1 bis 5, dadurch gekennzeichnet, daß die Ausfällungstemperatur zwischen 100°C und der Siedetemperatur, vorzugsweise bei einem Wert liegt, der um 1 bis 5°C unterhalb des Siedepunkts liegt.

7. Verfahren nach einem der Ansprüche 1 bis 6, dadurch gekennzeichnet, daß man die Übersättigung an Calciumsulfat im Verlaufe der Ausfällung so einstellt, daß die Wachstumsgeschwindigkeit der Körnchen zwischen 10 und 100 $\mu$m, zweckmäßig zwischen 15 und 30 $\mu$m, pro Stunde beträgt.

8. Verfahren nach Anspruch 7, dadurch gekennzeichnet, daß die Übersättigung eingestellt wird durch Zugabe von Calciumionen nach der eventuellen Zugabe von Schwefelsäure.

9. Verfahren nach jedem einzelnen der Ansprüche 1 bis 8, dadurch gekennzeichnet, daß die Menge an Material, das der Phosphorsäure zugesetzt wird, höchstens 10 Gew.-%, vorzugsweise höchstens 5 Gew.-%, der Phosphorsäure darstellt.

10. Verfahren nach einem der Ansprüche 1 bis 9, dadurch gekennzeichnet, daß die Einstellung (Kontrolle) der Übersättigung an Calciumsulfat wie folgt durchgeführt wird:

a) Einstellung des Gehaltes an Schwefelsäure auf einen Wert zwischen 1 und 7 Gew.-% und

b) Zugabe von Calcium in einer löslichen Form, wobei die Zugabe in einer oder mehreren Stufen durchgeführt werden kann, und daß es außerdem die folgende Stufe aufweist:

c) Abfiltrieren der erhaltenen Niederschläge.

11. Verfahren nach Anspruch 10, dadurch gekennzeichnet, daß die in der Stufe (b) zugegebene Calciummenge so groß ist, daß die in der Phosphorsäure vorhandene Schwefelsäure höchstens 2 Gew.-%, vorzugsweise höchstens 1 Gew.-% beträgt.

12. Verfahren nach einem der Ansprüche 10 und 11, dadurch gekennzeichnet, daß die Zugabe in löslicher Form, vorzugsweise in Form einer Phosphatlösung, erfolgt.

13. Verfahren nach einem der Ansprüche 10 bis 12, dadurch gekennzeichnet, daß die Stufe (b), die in mehreren Stufen durchgeführt wird, so geführt wird, daß die Übersättigung der Lösung an Calciumsulfat nicht mehr signifikant ist.

14. Verfahren nach einem der Ansprüche 1 bis 13, dadurch gekennzeichnet, daß die Verbindung der Formel (I) in einer Stufe (d) nachbehandelt wird, um daraus das Cadmium und die anderen Metalle, die in sein Gitter eingebaut sein können, zu eliminieren.

15. Verfahren nach Anspruch 14, dadurch gekennzeichnet, daß die Stufe (d) zur Nachbehandlung der Verbindung (I) durchgeführt wird durch Digerieren in einer Schwefelsäure, deren Konzentration zwischen 0,1 und 2 M liegt und dadurch, daß die zurückbleibende Lösung vor einer eventuellen Recyclisierung stromaufwärts von dem Phosphorsäureverfahren einer Operation zur Eliminierung der Schwermetalle unterzogen wird.

16. Verfahren nach einem der Ansprüche 14 und 15, dadurch gekennzeichnet, daß die Stufe (d) bei einer Temperatur zwischen 0 und 30°C durchgeführt wird.

17. Ausgefällte Verbindung der Formel (I)

$$( SO_4 )_{1-x}(PO_4)_x(H)_yCa_{1-\delta}M_\delta,$$

worin:

x   steht für eine Zahl zwischen $0,5 \cdot 10^{-2}$ und $1 \cdot 10^{-1}$, zweckmäßig zwischen $1 \cdot 10^{-2}$ und $0,5 \cdot 10^{-1}$,

y   steht für eine Zahl zwischen 0 und $x + \delta$, vorzugsweise zwischen $x - \delta/2$ und $x + \delta/2$;

$\delta$   die chemische Substitution des Calciums durch andere Metallkationen angibt und

M   steht für ein oder mehr Metallkationen, die in der Ausgangs-Phosphorsäure enthalten sind, dessen Gesamtladung etwa $2\delta + x - y$ beträgt und dessen Ionenradius höchstens um 1/3 von demjenigen des Kations $Ca^{++}$ verschieden ist.